# EUROPÄISCHE PATENTSCHRIFT

(11) **EP 1 448 966 B1**
(45) Veröffentlichungstag und Bekanntmachung des Hinweises auf die Patenterteilung: **23.05.2007**
(21) Anmeldenummer: 02787844.6
(22) Anmeldetag: 27.11.2002
(51) Int. Cl.: G10K 11/00, G01S 7/521

(54) **ULTRASCHALLWANDLER FÜR DEN EINSATZ UNTER EXTREMEN KLIMATISCHEN BEDINGUNGEN**
ULTRASOUND TRANSDUCER FOR APPLICATION IN EXTREME CLIMATIC CONDITIONS
TRANSDUCTEUR D'ULTRASONS DESTINE A ETRE EMPLOYE DANS DES CONDITIONS CLIMATIQUES EXTREMES

(30) Priorität: 27.11.2001 DE 10158144
(43) Veröffentlichungstag der Anmeldung: 25.08.2004
(73) Patentinhaber: Adolf Thies GmbH & Co KG, 37083 Göttingen (DE)
(72) Erfinder: BYZIO, Waldemar, 37133 Friedland (DE); WINDOLPH, Herbert, 37115 Duderstadt (DE)
(74) Vertreter: Rehberg Hüppe + Partner
(86) Internationale Anmeldenummer: PCT/EP2002/013360
(87) Internationale Veröffentlichungsnummer: WO 2003/045585

(56) Entgegenhaltungen:
- WO-A-98/38528
- DE-A- 19 957 125
- PATENT ABSTRACTS OF JAPAN vol. 012, no. 111 (E-598), 8. April 1988 (1988-04-08) -& JP 62 239800 A (MATSUSHITA ELECTRIC WORKS LTD), 20. Oktober 1987 (1987-10-20)
- PATENT ABSTRACTS OF JAPAN vol. 1996, no. 07, 31. Juli 1996 (1996-07-31) -& JP 08 065795 A (TOYOTA MOTOR CORP), 8. März 1996 (1996-03-08)

## Beschreibung

Die Erfindung bezieht sich auf einen Ultraschallwandler nach dem Oberbegriff des Anspruchs 1.

Im Bereich der Messtechnik werden überwiegend Ultraschallwandler im kleinen und mittleren Leistungsbereich eingesetzt. Die akustische oder Ultraschall-Anemometrie, d.h. die Windgeschwindigkeits- und -richtungsmessung, stellt hierbei besonders hohe Anforderungen an die Funktionsfähigkeit dieser Ultraschallwandler unter allen klimatisch vorkommenden Bedingungen.

In der Ultraschall-Anemometrie, aber auch bei der Abstandsmessung mit Ultraschall wird zur Bestimmung der Signallaufzeit ein akustischer Impuls oder Wellenzug auf einer Sendeseite erzeugt und auf einer Empfängerseite in ein elektrisches Signal zurückgewandelt.

Einige der Anforderungen, die an Eigenschaften und Funktionalitäten von Ultraschallwandlern für den Außeneinsatz gestellt werden müssen, sollen im folgenden beschrieben werden.

Die Effizienz der Wandlung des elektrischen Signals in ein akustisches Signal auf der Sendeseite und umgekehrt auf der Empfangsseite sollte in einem weiten Temperaturbereich konstant bleiben.

Bei resonanten Ultraschallwandlern sollte sich deren Resonanzfrequenz und Abstrahlverhalten (Keule, engl. Lobe) nur wenig durch Temperaturänderungen oder Masseänderungen auf den frei liegenden Schallwandlerflächen ändern, z. B. durch Regentropfen.

Der Aufbau von Eisschichten auf den frei liegenden Ultraschallwandlerflächen unter Vereisungs-Bedingungen darf nicht zum Ausfall des Systems führen.

Da jedoch die Zeitdauer einer solchen Vereisungssituation nicht bekannt ist, muss letztlich der Aufbau einer Eis- oder Raureifschicht selbst bei hohen Windgeschwindigkeiten sicher verhindert werden.

Eine Vereisung von Ultraschallwandlern kann z. B. durch eine ausreichende Beheizung derselben wirksam verhindert werden, wenn die Oberflächentemperatur der akustisch aktiven Fläche im positiven Temperaturbereich (> 0°C) gehalten werden kann.

Alle bekannten Ultraschallwandler besitzen einen auf dem piezoelektrischen oder magnetodynamischen Effekt basierenden elektrisch-mechanischen Leistungskonverter, d.h. Wandler, mit dem ein elektrische Signal in eine Bewegung (z. B. durch Längenänderung beim Piezo) und umgekehrt gewandelt werden kann.

Verwendet man einen solchen Wandler ohne weitere Maßnahmen zur Erzeugung einer Schallwelle in Luft, so gelingt die Einkopplung der mechanischen Leistung vom Festkörper des Wandlers mit seiner relativ hohen akustischen Impedanz in die Luft mit ihrer sehr geringen akustischen Impedanz nur unter hohen Anpassungsverlusten.

Zur Verringerung der Anpassungsverluste werden bekanntermaßen λ/4 Schichten eingesetzt, die hier allgemein als Anpassschichten bezeichnet werden und die idealerweise eine akustische Impedanz aufweisen, die bei dem geometrischen Mittelwert der Impedanzen des Festkörpers des Wandlers und der Luft liegt.

Eine optimale Impedanzanpassung durch eine solche Anpassschicht ist in der Praxis nicht möglich, da die oben erwähnte ideale akustische Impedanz mit keinem bekannten Material oder Materialkompositionen erreicht werden kann.

Die akustische Impedanz eines Materials ist das Produkt aus der Dichte des Materials und der Schallgeschwindigkeit im Material.

Dieser Zusammenhang deutet bereits an, dass für Anpassschichten geeignete Materialien oder Kompositionen in der Regel eine geringe Dichte aufweisen.

Gleichzeitig darf die Anpassschicht keine zu hohe Dämpfung der akustischen Welle aufweisen.

Fast alle für Anpassschichten zu Luft verwendbaren Materialien oder Materialkompositionen weisen aufgrund ihrer physikalischen Eigenschaften eine im Vergleich zu Metallen nur sehr geringe Wärmeleitfähigkeit auf.

Die Ansprüche an ihre akustischen Eigenschaften stehen leider im direkten Widerspruch zu der gewünschten guten Wärmeleitfähigkeit, die beim Beheizen gegen Vereisung benötigt wird.

Aus der DE 199 57 125 A1 ist ein Ultraschall-Wandler bekannt, der einen piezo-elektrischen Wandler und eine Anpassschicht aufweist. Dieser Ultraschall-Wandler dient zur Erfassung des Abstands von Objekten nach dem Echolaufzeitverfahren.

Aus der US 4,891,796 ist zum Einen eine Ultraschallsende- und Empfangseinheit bekannt, bei der elektrisch leitfähiges, schwingungsresistentes Gummi in dem schwingenden Element angeordnet ist und aufgeheizt wird, um das Vereisen zu verhindern. Näheres zu dem Ort der Anordnung des Gummis ist nicht beschrieben. Zum Anderen wird eine Ultraschallsende- und Empfangseinheit beschrieben, die mit einer Heizeinrichtung zur Verhinderung der Vereisens versehen ist, welche aus einer Anordnung von Bereichen einer Widerstandspaste mit einem positiven Temperaturkoeffizient besteht und sich in einem großflächig unterhalb einer Oberfläche erstreckt, zu der der Sender und der Empfänger der Einheit hin offen sind.

Aus der US 4,890,488 ist es bei einem Ultraschall-Anemometer bekannt, Vereisung durch Aufheizen entgegenzuwirken, was dort jedoch als zuviel Energie verbrauchend abgelehnt wird. Statt dessen wird soll das zur Messung verwendete Ultraschallsignal modifiziert werden, damit es durch Vereisungen weniger beeinflusst wird.

Aus der WO98/38528 ist ein Distanzmessgerät mit einem Wandler und einem Heizelement bekannt.

Der Erfindung liegt die Aufgabe zugrunde, ein Heizelement besonders effektiv in den Aufbau eines Ultraschallwandlers zu integrieren.

Diese Aufgabe wird durch einen Ultraschallwandler mit den Merkmalen des Patentanspruchs 1 gelöst. Vorteilhafte Ausführungsformen des Ultraschallwandlers sind in den Unteransprüchen 2 bis 9 angeführt.

Die folgenden aufgeführten Probleme mussten durch erfinderische Leistungen überwunden werden:

Die Anpassschicht besteht aus einer Materialkomposition mit schlechter Wärmeleitfähigkeit. Durch Änderung der Materialkomposition musste die Wärmeleitfähigkeit um mindestens den Faktor 2 verbessert werden, ohne gleichzeitig die akustische Anpassung maßgeblich zu verschlechtern.

Der Wärmefluss sollte einen möglichst kurzen Weg durch die schlecht wärmeleitende Anpassschicht zurücklegen, um den Auskühlungseffekt durch starken Wind so klein wie möglich zu halten.

Die thermische Impedanz der Anpassschichtoberfläche zur Umgebung ist in hohem Maße von der Strömungsgeschwindigkeit der Luft abhängig. (Auf diesem hier unerwünschten Effekt basieren thermische Anemometer).

Das heizende Element sollte seine Temperatur möglichst selbsttätig konstant halten, damit eine Überhitzung bei fehlender Abkühlung durch strömende Luft sicher vermieden wird. (Aufgrund der Geometrie der Ultraschallwandler ist der Einbau eines Temperatursensors als IST - Wertaufnehmer für eine Regelung nahezu ausgeschlossen).

Die Temperatur des Heizelementes musste aufgrund des nach wie vor hohen Wärmewiderstandes der Anpassschicht relativ hoch gewählt werden (ca. 90°C).

Gleichzeitig muss mit hohem thermischen Stress bei jedem Einschalten der Heizung eines ausgekühlten US-Wandlers gerechnet werden.

Bei diesem Vorgang können kurzzeitig Temperaturdifferenzen von bis zu 120 Kelvin zwischen den Bauteilen des Ultraschallwandlers auftreten.

Aus diesem Grunde müssen die gewählten Materialien in etwa gleiche Temperaturkoeffizienten auf weisen, oder die Schichten geeignet mechanisch verankert werden, um eine Zerstörung durch Spaltbildung und Abriss sicher zu verhindern.

Die Materialien einer als elektro-akustischen Wandler eingesetzten Piezo-Keramik und ein als Heizelement eingesetzter keramikähnlicher PTC-Widerstand unterscheiden sich in ihren thermischen Ausdehnungskoeffizienten nicht maßgeblich, so dass selbst eine flächige Lötverbindung bei den hier vorliegenden Geometrien funktionsfähig bleibt.

Der Ausdehnungskoeffizient des Anpassschichtmaterials unterscheidet sich jedoch erheblich von den oben genannten Materialien (Piezo- und PTC-Keramik), so dass erhebliche mechanische Spannungen bei den zu erwartenden unterschiedlichen Betriebs-Temperaturen an den Grenzflächen zwischen den Materialien auftreten.

Eine Beschädigung, Änderung der Eigenschaften oder gar ein Ausfall der Wandler durch diese mechanischen Spannungen muss sicher verhindert werden.

Die Masse der akustisch aktiven Elemente des Wandlers wird durch den Einbau einer heizenden Schicht mit geringer Dämpfung in den akustischen Weg erheblich vergrößert. Dadurch schwingt der Sensor nach Anregung im Sendefall erheblich länger nach. Um trotzdem die von der Messstreckenlänge abhängige, maximal mögliche Messwertaufnahmerate zu erhalten, sollte der Sensor durch den Einbau eines geeigneten Materials passiv bedämpft werden.

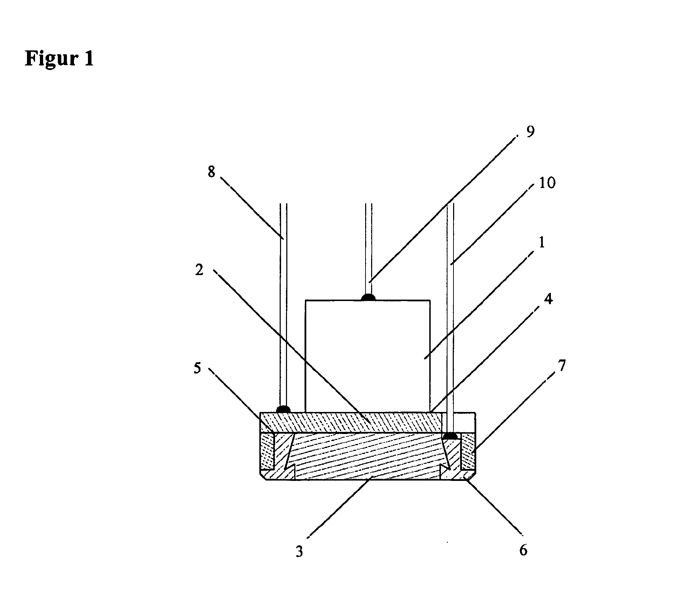

Figur 1 zeigt eine bevorzugte Ausführungsform des neuen Ultraschallwandlers im Querschnitt.

Dabei geht die Zuordnung der Bauteile des Ultraschallwandlers aus der nachstehenden Bezugszeichenliste hervor.

### Bezugszeichenliste:

- 1 -: Wandler
- 2 -: Heizelement
- 3 -: Anpassschicht
- 4 -: Weichlotschicht
- 5 -: Weichlotschicht
- 6 -: Metallring
- 7 -: Ring
- 8 -: Masseleitung
- 9 -: Signalleitung
- 10 -: Heizleitung

## Patentansprüche

1. Ultraschallwandler mit einer freiliegenden akustischen Fläche, mit einem elektrisch-mechanischen Wandler (1), der eine akustisch aktive Fläche aufweist, mit einer akustischen Anpassschicht (3), die vor der akustisch aktiven Fläche des Wandlers (1) angeordnet ist und die die freiliegende akustische Fläche ausbildet, und mit einem elektrischen Heizelement (2), **dadurch gekennzeichnet, dass** das Heizelement (2) auf der akustisch aktiven Fläche des Wandlers (1) angeordnet ist, wobei eine Anschlusselektrode des Wandlers (1) an seiner akustisch aktiven Fläche mit einer Anschlusselektrode des Heizelements (2) vollflächig metallisch verbunden ist.

2. Ultraschallwandler nach Anspruch 1, **dadurch gekennzeichnet, dass** das Heizelement (2) ein keramisches PTC-Widerstandsmaterial aufweist, welches durch Verringerung seines elektrischen Leitwerts mit der Temperatur eine Selbstregelung seiner Temperatur zeigt.

3. Ultraschallwandler nach Anspruch 1 oder 2, **dadurch gekennzeichnet, dass** die akustische Anpassschicht (3), die die freiliegende akustische Fläche des Wandlers ausbildet, auf dem Heizelement (2) angeordnet ist.

4. Ultraschallwandler nach Anspruch 1, **dadurch gekennzeichnet, dass** die Anschlusselektroden durch eine Weichlotschicht (4) miteinander verbunden sind.

5. Ultraschallwandler nach Anspruch 1 oder 4, **dadurch gekennzeichnet, dass** die Anschlusselektroden gemeinsam an eine Masseleitung (8) angeschlossen sind.

6. Ultraschallwandler nach einem der Ansprüche 1 bis 5, **dadurch gekennzeichnet, dass** auf dem Heizelement (2) auch ein die Anpassschicht (3) seitlich umschließender Metallring (6) angeordnet ist.

7. Ultraschallwandler nach Anspruch 6, **dadurch gekennzeichnet, dass** der Metallring (6) mit einer vorderen Anschlusselektrode des Heizelements (2) durch eine Weichlotschicht (5) verbunden ist.

8. Ultraschallwandler nach Anspruch 6 oder 7, **dadurch gekennzeichnet, dass** der Metallring (6) die Anpassschicht (3) formschlüssig hält und zwangszentriert.

9. Ultraschallwandler nach einem der Ansprüche 6 bis 8, **dadurch gekennzeichnet, dass** auf dem Metallring (6) ein Ring (7) aus passiv dämpfenden akustischen Material angeordnet ist.

10. Ultraschallwandler nach einem der Ansprüche 1 bis 9, **dadurch gekennzeichnet, dass** der Wandler (1) ein piezoelektrisches oder magnetodynamisches Wandlermaterial aufweist, dass das Heizelement (2) für eine Heiztemperatur von 80 bis 90°C ausgelegt ist und dass die Anpassschicht (3) bis zu dieser Heiztemperatur thermisch stabil bleibt und ihre akustischen Eigenschaften beibehält.

## Claims

1. An ultrasound transducer comprising an exposed acoustic surface, an electromechanical transducer (1) which has an acoustically active surface, an acoustic matching layer (3) which is arranged in front of the acoustically active surface of the transducer (1) and which provides the exposed acoustic surface, and an electric heating element (2), **characterized in that** the heating element (2) is arranged on the acoustically active surface of the transducer (1), wherein a connector electrode of the transducer (1) at the acoustically active surface of the transducer (1) is - over its entire contact area - metallically connected to a connector electrode of the heating element (2).

2. The ultrasound transducer of claim 1, **characterized in that** the heating element (2) comprises a ceramic PTC-resistance material, which displays a self-regulation of its temperature by means of a decrease of its electric conductance with increasing temperature.

3. The ultrasound transducer of claim 1 or 2, **characterized in that** the acoustic matching layer (3) which provides the exposed acoustic surface of the transducer is arranged on the heating element (2).

4. The ultrasound transducer of claim 1, **characterized in that** the connector electrodes are connected to each other by a first soft solder layer (4).

5. The ultrasound transducer of claim 1 or 4, **characterized in that** the connector electrodes are conjointly connected to a ground line (8).

6. The ultrasound transducer of any of the claims 1 to 5, **characterized in that** a metal ring (6) laterally enclosing the matching layer (3) is also arranged on the heating element (2).

7. The ultrasound transducer of claim 6, **characterized in that** the metal ring (6) is connected to a front connector electrode of the heating element (2) by means of a soft solder layer (5).

8. The ultrasound transducer of claim 6 or 7, **characterized in that** the metal ring (6) holds the matching layer (3) with positive fit and positively centers the matching layer (3).

9. The ultrasound transducer of any of the claims 6 to 8, **characterized in that** a ring (7) made of a passively attenuating acoustic material is arranged on the metal ring (6).

10. The ultrasound transducer of any of the claims 1 to 9, **characterized in that** the transducer (1) comprises a piezo-electric or magneto-dynamic transducer material, that the heating element (2) is designed for a heating temperature of 80 to 90 °C, and the matching layer (3) is stable and maintains its acoustic properties up to this heating temperature.

## Revendications

1. Transducteur ultrasonore avec une surface acoustique libre, avec un convertisseur électromécanique (1) présentant une surface acoustiquement active, avec une couche d'adaptation acoustique (3) disposée devant la surface acoustiquement active du convertisseur (1) et formant la surface acoustique libre, et avec un élément chauffant électrique (2), **caractérisé en ce que** l'élément chauffant (2) est disposé sur la surface acoustiquement active du convertisseur (1), une électrode de connexion du convertisseur (1) étant raccordée sur sa surface acoustiquement active à une électrode de connexion de l'élément de chauffe (2) par toute sa surface métallique.

2. Transducteur ultrasonore selon la revendication 1, **caractérisé en ce que** l'élément chauffant (2) comprend un matériau céramique de résistance PTC, lequel présente une autorégulation de sa température par diminution à la température de sa valeur de conductance électrique.

3. Transducteur ultrasonore selon la revendication 1 ou la revendication 2, **caractérisé en ce que** la couche d'adaptation acoustique (3) formant la surface acoustique libre du convertisseur est disposée sur l'élément chauffant (2).

4. Transducteur ultrasonore selon la revendication 1, **caractérisé en ce que** les électrodes de connexion sont reliées entre elles par une couche de brasure tendre (4).

5. Transducteur ultrasonore selon la revendication 1 ou la revendication 4, **caractérisé en ce que** les électrodes de connexion sont raccordées ensemble à une ligne de masse (8).

6. Transducteur ultrasonore selon l'une des revendications 1 à 5, **caractérisé en ce qu'**une bague métallique (6) entourant latéralement la couche d'adaptation (3) est également disposée sur l'élément chauffant (2).

7. Transducteur ultrasonore selon la revendication 6, **caractérisé en ce que** la bague métallique (6) est reliée par une couche de brasure tendre (5) à une électrode de connexion antérieure de l'élément chauffant (2).

8. Transducteur ultrasonore selon la revendication 6 ou la revendication 7, **caractérisé en ce que** la bague métallique (6) maintient la couche d'adaptation (3) par correspondance de forme et exerce sur elle un centrage forcé.

9. Transducteur ultrasonore selon l'une des revendications 6 à 8, **caractérisé en ce qu'**une bague (7) en matériau passivement amortisseur acoustique est disposée sur la bague métallique (6).

10. Transducteur ultrasonore selon l'une des revendications 1 à 9, **caractérisé en ce que** le convertisseur (1) comprend un matériau transducteur piézoélectrique ou magnétodynamique, **en ce que** l'élément chauffant (2) est prévu pour une température de chauffage comprise entre 80 et 90 °C, et **en ce que** la couche d'justement (3) reste thermiquement stable et conserve ses propriétés acoustiques jusqu'à cette température de chauffage.
